# EUROPEAN PATENT APPLICATION

(11) **EP 4 760 470 A1**
(43) Date of publication of application: **17.06.2026**
(21) Application number: 24863189.7
(22) Date of filing: 04.09.2024
(51) Int. Cl.: G06F 3/0484, G06F 3/041

(54) **ELECTRONIC DEVICE, METHOD, AND NON-TRANSITORY STORAGE MEDIUM FOR CONTROLLING SCREEN OF DISPLAY**

(30) Priority: 06.09.2023 KR 20230118419; 31.10.2023 KR 20230147851
(71) Applicant: Samsung Electronics Co., Ltd., Suwon-si, Gyeonggi-do 16677 (KR)
(72) Inventor: KOH, Sanghyuk, Suwon-si Gyeonggi-do 16677 (KR); IM, Seungbin, Suwon-si Gyeonggi-do 16677 (KR)
(74) Representative: HGF
(86) International application number: PCT/KR2024/013326
(87) International publication number: WO 2025/053609

(57) **Abstract**

This document relates to an electronic device, a method, and a non-transitory storage medium for controlling a screen of a display. According to an embodiment, the electronic device may comprise: a first housing having a first surface and a second surface; a second housing rotatably connected to the first housing and having a third surface and a fourth surface; a first display disposed on the first surface of the first housing and the third surface of the second housing; a second display disposed on the fourth surface of the second housing; a memory; and at least one processor. According to an embodiment, the at least one processor is configured to: detect a change in the angle between the first housing and the second housing when an execution screen of a first application is displayed on the second display; determine whether a first user input is received when the change is detected; control the first display to display a first screen on the first display when the first user input is received; and control the first display to display a second screen on the first display when the first user input is not received. Other embodiments are possible.

## Description

### [Technical Field]

The disclosure relates to an electronic device, a method for controlling a screen of a display in the electronic device, and a non-transitory storage medium.

### [Background Art]

Remarkable advancements in information and communication technology and semiconductor technology have led to a rapid increase in the distribution and use of various electronic devices. In particular, recent electronic devices are being developed to be portable and capable of communication.

An electronic device may refer to a device that performs specific functions according to an embedded program, such as home appliances, an electronic organizer, a portable multimedia player, a mobile communication terminal, a tablet PC, an image/audio device, a desktop/laptop computer, or an in-vehicle navigation system. For example, such electronic devices may output stored information as sound or images. As the degree of integration of electronic devices increases and ultra-high-speed, high-capacity wireless communication becomes widespread, in recent years, various functions may be provided by a single electronic device, such as a mobile communication terminal. For example, in addition to communication functions, entertainment functions such as games, multimedia functions such as music/video playback, communication and security functions for mobile banking, or schedule management or electronic wallet functions are being integrated into a single electronic device. Such electronic devices are being miniaturized to allow a user to conveniently carry the electronic devices. As mobile communication services expand into a multimedia service area, the display size of an electronic device may increase so that a user may sufficiently use multimedia services in addition to voice calls or short messages. Accordingly, a foldable flexible display may be disposed over the entire area of a foldable, separated housing structure.

The information described above may be provided as a related art for helping understanding of the disclosure. No assertion or determination is made as to whether any content described above could be applied as prior art related to the disclosure.

### [Detailed Description of the Invention]

### [Technical Solution]

According to an embodiment of the disclosure, an electronic device may include a first housing including a first side and a second side, a second housing rotatably connected to the first housing and including a third side and a fourth side, a first display disposed at the first side of the first housing and the third side of the second housing, a second display disposed at the fourth side of the second housing, memory storing instructions, the first display, and at least one processor.

According to an embodiment, the instructions may be configured to, when executed by the at least one processor individually or collectively, cause the electronic device to, when an execution screen of a first application is displayed on the second display, detect a change of an angle between the first housing and the second housing. According to an embodiment, the at least one processor may be configured to, when the change is detected, identify whether a first user input is received.

According to an embodiment, the instructions may be configured to, when executed by the at least one processor individually or collectively, cause the electronic device to, when the first user input is received, control the first display to display a first screen on the first display.

According to an embodiment, the instructions may be configured to, when executed by the at least one processor individually or collectively, cause the electronic device to, when the first user input is not received, control the first display to display a second screen on the first display.

According to an embodiment, an operation method of an electronic device including a first housing including a first side and a second side and a second housing rotatably connected to the first housing and including a third side and a fourth side may include, when an execution screen of a first application is displayed on a second display of the electronic device, detecting a change of an angle between the first housing and the second housing. According to an embodiment, the method may include, when the change is detected, identifying whether a first user input is received.

According to an embodiment, the method may include, when the first user input is received, displaying a first screen on a first display of the electronic device.

According to an embodiment, the method may include, when the first user input is not received, displaying a second screen on the first display.

According to an embodiment, the first display may be disposed at the first side of the first housing and the third side of the second housing, and the second display may be disposed at the fourth side of the second housing.

According to an embodiment, in a non-transitory storage medium storing a program, the program may include instructions which are configured to, when executed by a processor of an electronic device including a first housing including a first side and a second side and a second housing rotatably connected to the first housing and including a third side and a fourth side, cause the electronic device to execute operations of, when an execution screen of a first application is displayed on a second display of the electronic device, detecting a change of an angle between the first housing and the second housing, when the change is detected, identifying whether a first user input is received, when the first user input is received, displaying a first screen on a first display of the electronic device, and when the first user input is not received, displaying a second screen on the first display, wherein the first display is disposed at the first side of the first housing and the third side of the second housing, and wherein the second display is disposed at the fourth side of the second housing.

### [Brief Description of Drawings]

FIG. 1 is a block diagram of an electronic device in a network environment according to various embodiments.
FIGS. 2A and 2B are perspective views of an electronic device in an unfolded state according to an embodiment.
FIG. 2C is a perspective view of an electronic device in a folded state according to an embodiment.
FIG. 2D is a perspective view of an electronic device in a folded state and an unfolded state according to an embodiment.
FIG. 3 is a diagram illustrating an example of controlling a screen of a display according to a change of an electronic device from a folded state to an unfolded state according to an embodiment.
FIGS. 4A and 4B are diagrams illustrating an example of controlling a screen of a display according to a change of an electronic device from a folded state to an unfolded state according to an embodiment.
FIG. 5 is a diagram illustrating an example of controlling a screen of a display according to a change of an electronic device from a folded state to an unfolded state according to an embodiment.
FIG. 6 is a diagram illustrating an example of controlling a screen of a display according to a change in an electronic device from an unfolded state to a folded state according to an embodiment.
FIGS. 7A and 7B are diagrams illustrating an example of controlling a screen of a display according to a change in an electronic device from an unfolded state to a folded state according to an embodiment.
FIGS. 8A and 8B are diagrams illustrating an example of controlling a screen of a display according to a change of an electronic device from a folded state to an unfolded state according to an embodiment.
FIG. 9 is a diagram illustrating an example of an operation method of an electronic device according to an embodiment.

In relation to the description of drawings, the same or similar elements may be indicated by the same or similar reference signs.

### [Mode for Carrying out the Invention]

Hereinafter, embodiments of the disclosure will be described in detail with reference to the drawings so that a person having common knowledge in the technical field to which the disclosure belongs are able to readily carry out the embodiments. However, the disclosure may be implemented in various forms, and should not be construed as being limited to the embodiments set forth herein. In relation to the description of drawings, the same or similar elements may be indicated by the same or similar reference signs. In addition, in the drawings and related descriptions, description of well-known functions and configurations may be omitted of clarity and briefness. The term "user" used in an embodiment of the disclosure may refer to a person using an electronic device or a device (e.g., an artificial intelligence electronic device) using the electronic device.

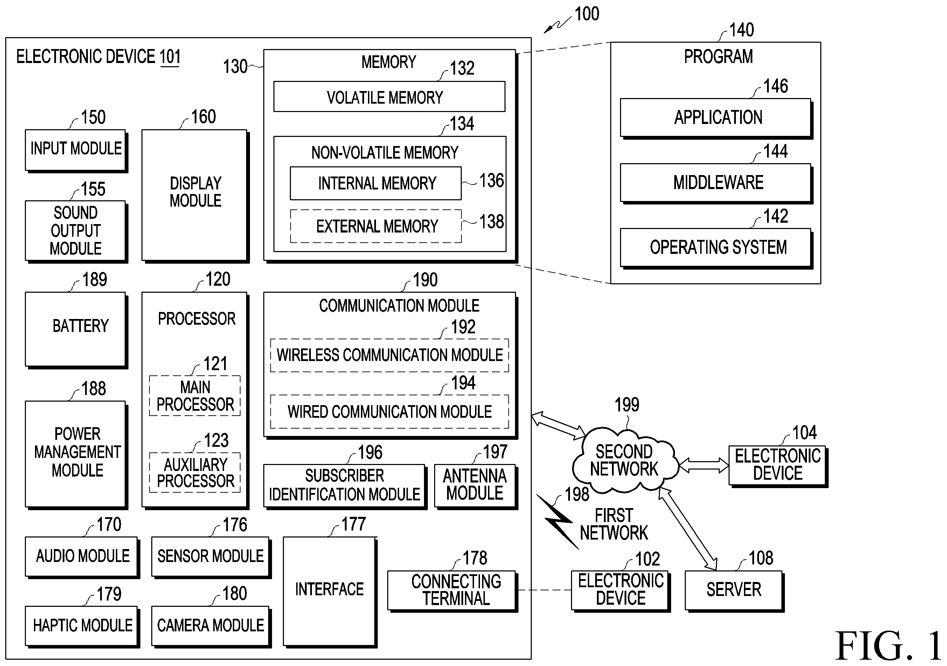

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

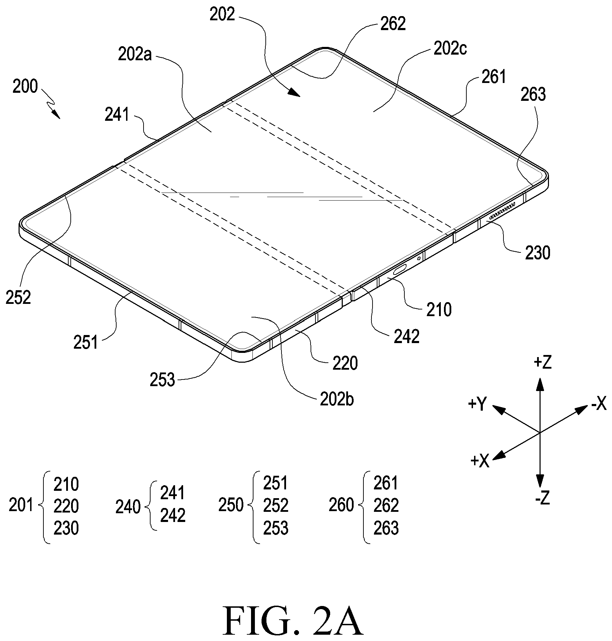

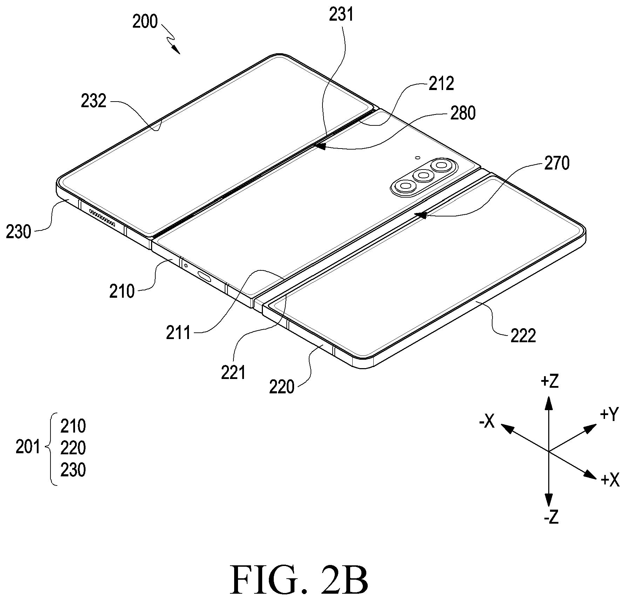

FIGS. 2A and 2B are perspective views of an electronic device in an unfolded state according to an embodiment. FIG. 2A may be an oblique view of a one-side surface (e.g., a front surface) of an electronic device 200 according to an embodiment in an unfolded state (e.g., a first state), and FIG. 2B may be an oblique view of the other-side surface (e.g., a rear surface) of the electronic device 200 according to an embodiment in an unfolded state. The elements in FIGS. 2A and 2B may be partially or entirely the same as the elements described with reference to FIG. 1.

Referring to FIGS. 2A and 2B, according to an embodiment, the electronic device 200 may include a housing 201. The electronic device 200 may include a first display 202 (e.g., the display module 160 in FIG. 1). The housing 201 may configure a space where the first display 202 is disposed. The first display 202 may be the flexible display 202 disposed on a front surface of the housing 201. The first display 202 may be at least partially folded or unfolded. The front surface may be configured to face a +z direction in an unfolded state of the electronic device 101 in FIG. 2A. For example, a first side may be a surface where a first housing 210 and a second housing 220 face each other when the housing 202 is changed from an unfolded state to a folded state (rotated from a +x direction to a -x direction). The folded state may include a fully folded state and a slightly open state (e.g., a state of being opened at an angle less than a specified angle at which the first display 202 as a main display is not activated). According to an embodiment, the housing 201 may include the first housing 210 including the first side (e.g., a front surface) and a second side (e.g., a rear surface) and the second housing 220 including a third surface (e.g., a front surface) and a fourth surface (e.g., a rear surface) and rotatably connected to the first housing 210. According to an embodiment, the housing 201 of the electronic device 200 may be configured in a multi-foldable form further including a third housing 230 including a fifth side (e.g., a front surface) and a sixth side (e.g., a rear surface) and rotatably connected to the first housing 210. However, the disclosure is not limited thereto, and the housing 201 of the electronic device 200 may be configured in a multi-foldable form including four or more housings.

The first housing 210 may be disposed between the second housing 220 and the third housing 230. The second housing 220 may be rotatably coupled to the first housing 210. The third housing 230 may be rotatably coupled to the first housing 210. The first display 202 may include a first display area 202a configured to be similar to or identical to the size of the front surface (e.g., the first side) of the first housing 210, a second display area 202b configured to be similar to or identical to the size of the front surface (e.g., the third side) of the second housing 220, and a third display area 202c configured to be similar to or identical to the size of the front surface (e.g., the fifth side) of the third housing 230.

According to an embodiment, the electronic device 200 may include a support 240, 250, and 260. The support 240, 250, and 260 may be disposed between the housing 201 and the first display 202. The support 240, 250, and 260 may be coupled to the housing 201 and may support the first display 202. The support 240, 250, and 260 may be disposed to surround edges of the first display 202. The support 240, 250, and 260 may extend along a circumference of the housing 201. The support 240, 250, and 260 may include a first support 240 disposed at the first housing 210, a second support 250 disposed at the second housing 220, and a third support 260 disposed at the third housing 230. The support 240, 250, and 260 may be referred to as a "body." The support 240, 250, and 260 may be referred to as a "frame." The support 240, 250, and 260 may be referred to as a "sealing member." The support 240, 250, and 260 may be referred to as a "peripheral part." The support 240, 250, and 260 may be referred to as a "circumferential part." The support 240, 250, and 260 may be referred to as a "peripheral structure." The support 240, 250, and 260 may be referred to as a "circumferential structure."

According to an embodiment, the support 240, 250, and 260 may include the first support 240. The first support 240 may be disposed between the first housing 210 and the first display 202. The first support 240 may be disposed along edges of the first housing 210. The first support 240 may include a (1-1)th support 241 and a (1-2)th support 242. At least a portion of the display 202 may be disposed between the (1-1)th support 241 and the (1-2)th support 242. The (1-1)th support 241 may be disposed at one end of the first housing 210, and the (1-2)th support 242 may be disposed at the other end of the first housing 210. Each of the first, second, and third support 240, 250, and 260 may be named as a "support." The support 240, 250, and 260 may include a non-conductive member. The support 240, 250, and 260 may be named as a "deco," a "finishing member," or a "non-conductive member."

According to an embodiment, the support 240, 250, and 260 may include the second support 250. The second support 250 may be disposed between the second housing 220 and the first display 202. The second support 250 may be disposed along edges of the second housing 220. The second support 250 may include a (2-1)th support 252, a (2-2)th support 252, and a (2-3)th support 253. At least a portion of the display 202 may be disposed between the (2-2)th support 252 and the (2-3)th support 253. The (2-1)th support 251 may connect the (2-2)th support 252 and the (2-3)th support 253. The (2-1)th support 251 may extend along an edge (e.g., an edge 222 in FIG. 2B or the third side) of the second housing 220. The (2-1)th support 251 may be disposed between the edge 222 of the second housing 220 and the first display 202. The (2-1)th support 251 may be named as a "support frame" or a "first support frame." Each of the (2-2)th support 252 and the (2-3)th support 253 may be referred to as a "second support frame."

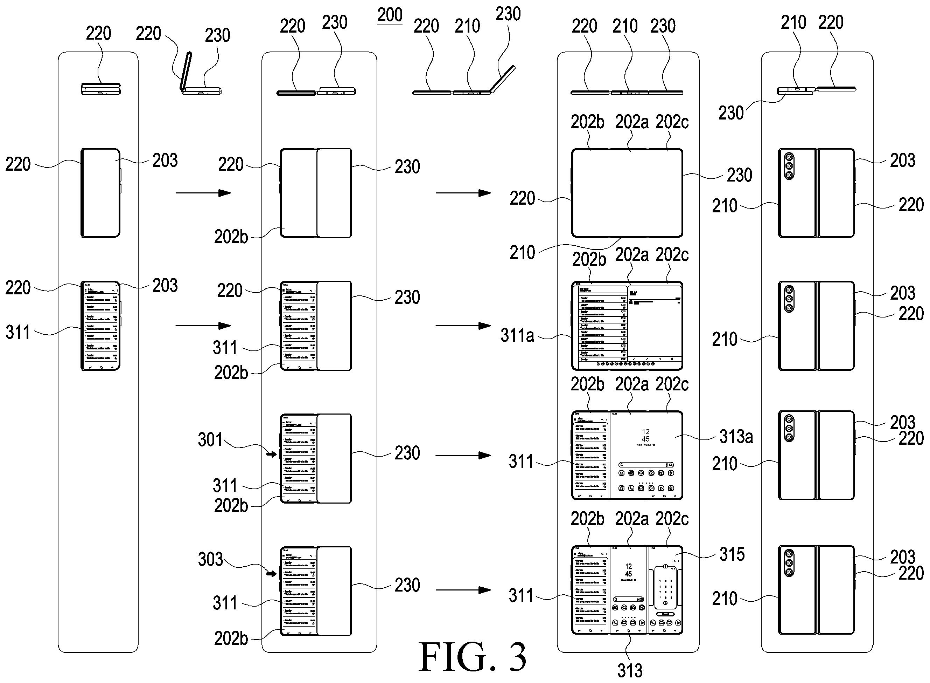

According to an embodiment, the support 240, 250, and 260 may include the third support 260. The third support 260 may be disposed between the third housing 230 and the first display 202. The third support 260 may be disposed along edges of the third housing 230. The third support 260 may include a (3-1)th support 261, a (3-2)th support 262, and a (3-3)th support 263. At least a portion of the display 202 may be disposed between the (3-2)th support 262 and the (3-3)th support 263. The (3-1)th support 261 may connect the (3-2)th support 262 and the (3-3)th support 263. The (3-1)th support 261 may extend along an edge (e.g., an edge 232 in FIG. 3) of the third housing 230. The (3-1)th support 261 may be disposed between the edge 232 of the third housing 230 and the display 202. The (3-1)th support 261 may be named as a "support frame" or a "first support frame." Each of the (3-2)th support 262 and the (3-3)th support 263 may be referred to as a "second support frame."

According to an embodiment, the first housing 210 may include a (1-1)th side portion 211 and a (1-2)th side portion 212. The (1-1)th side portion 211 and the (1-2)th side portion 212 may respectively configure opposite lateral sides of the first housing 210. The second housing 220 may be coupled to the (1-1)th side portion 211. The third housing 230 may be coupled to the (1-2)th side portion 212. The (1-1)th side portion 211 may be named as a "first coupling portion." The (1-2)th side portion 212 may be named as a "second coupling portion." The (1-1)th side portion 211 may be named as a "first portion." The (1-2)th side portion 212 may be named as a "second portion."

According to an embodiment, the second housing 220 may include a (2-1)th side portion 221 and a (2-2)th side portion 222 (e.g., the third side). The (2-1)th side portion 221 and the (2-2)th side portion 222 may respectively configure opposite lateral sides of the second housing 220. The (2-1)th side portion 221 may be coupled to the first housing 210. The (2-2)th side portion 222 may configure a lateral side of the housing 201. The (2-2)th side portion 222 may be named as an "edge." The (2-1)th side portion 221 may be named as a "third side portion." The (2-2)th side portion 222 may be named as a "fourth side portion."

According to an embodiment, the third housing 230 may include a (3-1)th side portion 231 and a (3-2)th side portion 232. The (3-1)th side portion 231 and the (3-2)th side portion 232 may respectively configure opposite lateral sides of the third housing 230. The (3-1)th side portion 231 may be coupled to the first housing 210. The (3-2)th side portion 232 may configure a lateral side of the housing 201. The (3-2)th side portion 232 may be named as an "edge." The (3-1)th side portion 231 may be named as a "fifth side portion." The (3-2)th side portion 232 may be named as a "sixth side portion."

According to an embodiment, the electronic device 200 may include a first hinge 270 and a second hinge 280. The first hinge 270 may be disposed between the first housing 210 and the second housing 220. The first hinge 270 may be disposed between the (1-1)th side portion 211 and the (2-1)th side portion 221. The first hinge 270 may rotatably connect the first housing 210 and the second housing 220. The second hinge 280 may be disposed between the first housing 210 and the third housing 230. The second hinge 280 may be disposed between the (1-2)th side portion 212 and the (3-1)th side portion 231. The second hinge 280 may rotatably connect the first housing 210 and the third housing 230. The first hinge 270 may be referred to as a "first hinge member." The second hinge 280 may be named as a "second hinge member."

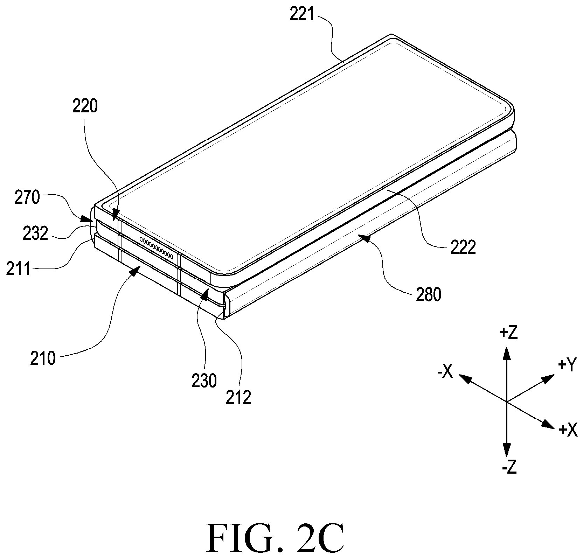

FIG. 2C is a perspective view of an electronic device in a folded state according to an embodiment. The elements in FIG. 2C may be partially or entirely the same as the elements described with reference to FIG. 1, FIG. 2A, and FIG. 2B.

Referring to FIG. 2C, the second housing 220 of the electronic device 200 according to an embodiment may be rotated with respect to the first housing 210. The first hinge 270 may provide a rotation axis to the second housing 220. The first hinge 270 may connect the (1-1)th side portion 211 and the (2-1)th side portion 221. The third housing 230 may be rotated with respect to the first housing 210. The second hinge 280 may provide a rotation axis to the third housing 230. The second hinge 280 may connect the (1-2)th side portion 212 and the (3-1)th side portion 231.

According to an embodiment, in a folded state of the electronic device 200, the first, second, and third housings 210, 220, and 230 may be arranged in a single direction (e.g., a +Y direction). For example, when the third housing 230 is rotated and folded with respect to the first housing 210, the third housing 230 may be disposed on the first housing 210, and when the second housing 220 is rotated and folded with respect to the first housing 210, the second housing 220 may be disposed on the third housing 230. For example, in a folded state, the third housing 230 may be disposed between the first housing 210 and the second housing 220. According to an embodiment, the electronic device 200 may include a second display 203 disposed on the rear surface of the second housing 220. According to an embodiment, the electronic device 200 may include an input/output interface disposed on the rear surface of the third housing 220. Here, a rear surface (e.g., the second side of the first housing, the fourth side of the second housing, and the sixth side of the third housing) may be configured to face a -z direction in an unfolded state of the electronic device 101, as illustrated in FIG. 2A and FIG. 2B. A rear surface may be configured to face a direction opposite to a front surface (e.g., the first side of the first housing, the third side of the second housing, and the fifth side of the third housing).

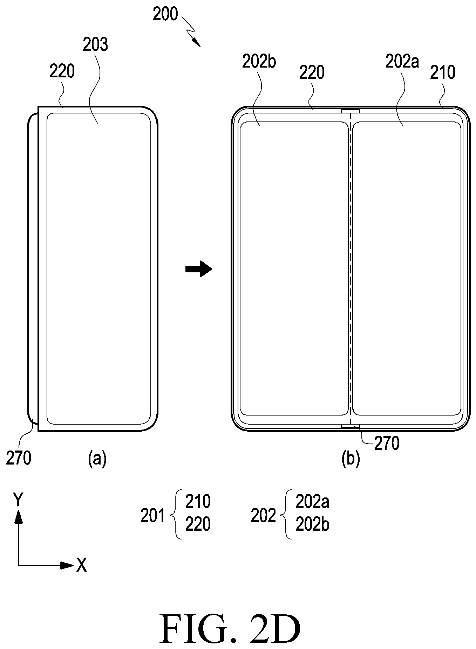

FIG. 2D is a perspective view of an electronic device in a folded state and an unfolded state according to an embodiment. The elements in FIG. 2D may be partially or entirely the same as the elements described with reference to FIG. 1 and FIG. 2A to FIG. 2C.

Referring to FIG. 2D, a housing 201 of an electronic device 200 according to an embodiment may include a first housing 210 and a second housing 220. The electronic device 200 may include a hinge 270 configured between the first housing 210 and the second housing 220. The second housing 220 may be folded or unfolded by rotating with respect to the hinge 270 (e.g., in the y direction). The electronic device 200 may include a first display 202 disposed on front surfaces (e.g., a first side) of the first housing 210 and the second housing 220, and a second display 203 disposed on a rear surface (e.g., a second side) of the second housing 220. The first display 202 may include a first display area 202a configured on the front surface (e.g., the first side) of the first housing 210 and a second display area 202b configured on the front surface (e.g., the first side) of the second housing 220.

Referring to FIG. 1, FIG. 2A, FIG. 2B, FIG. 2C, and FIG. 2D, the electronic device 200 according to an embodiment may include the first display 202, the second display 203, the memory 130, and the at least one processor 120. In addition, the electronic device 200 may further include other elements shown in FIG. 1. According to an embodiment, the at least one processor 120 of the electronic device 200 may be operatively connected to the first display 202, the second display 203, and the memory 130, and may control a screen displayed on at least a portion of the first display 202 and/or the second display 203 when the electronic device is changed to a folded state or an unfolded state. The electronic device 200 according to an embodiment is not limited to being folded based on the direction (e.g., a configuration direction of the hinge 270 and/or the hinge 280 such as the y direction) shown in FIG. 2A to FIG. 2D, but may also be configured to be folded based on another direction (e.g., the x direction).

When the housing 201 of the electronic device 200 according to an embodiment is configured to include the first housing 210 and the second housing 220, the second housing 220 may be changed to a folded state by rotating with respect to the first hinge 270. When the housing 201 of the electronic device 220 according to an embodiment is configured in a multi-foldable form including the first housing 210, the second housing 220, and the third housing 230, as illustrated in FIG. 2C, the third housing 230 may be changed to a folded state (e.g., a first folded state) by rotating with respect to the second hinge 280, and the second housing 220 may be changed to a folded state (e.g., a second folded state) by rotating with respect to the first hinge 270.

According to an embodiment, when a first user input is received while the second housing 220 is in a folded state, and it is identified that the second housing 220 is changed from the folded state to an unfolded state, the at least one processor 120 may control the first display 202 to display a first screen on the first display 202. The first screen may be a screen that is displayed on the second display 203 in the folded state and is maintained and displayed on the first display 202, and may include execution screens of at least two applications including a first application. The first user input may be an input to a first button (e.g., a power button) disposed on the third side (e.g., the (2-2)th side portion 222) of the second housing 220. According to an embodiment, based on identifying that the first housing 210 is changed from a folded state to an unfolded state with no first user input while the second housing 202 is in the folded state, the at least one processor 120 may control the first display 202 to display a second screen on the first display 202. The second screen may be a specified screen different from the screen displayed on the second display and may include an execution screen of the first application fitted to the first display 202.

According to an embodiment, when a touch input is received while the second housing 220 is in an unfolded state, and it is identified that the second housing 220 is changed from the unfolded state to a folded state, the at least one processor 120 may control the second display 203 to maintain the first screen displayed on one area of the first display 202 in the unfolded state and display the first screen on the second display 203. According to an embodiment, when it is identified that the second housing 220 is changed from an unfolded state to a folded state with no touch input while the second housing 220 is in the unfolded state, the at least one processor 120 may turn off the second display 203.

Hereinafter, in the description with reference to FIG. 3 to FIG. 8B, an example of controlling a screen of a display will be described for a case where the housing 201 of the electronic device 200 is configured in a multi-foldable form including the first housing 210, the second housing 220, and the third housing 230, as shown in FIG. 2A to FIG. 2C.

FIG. 3 is a diagram illustrating an example of controlling a screen of a display according to a change of an electronic device from a folded state to an unfolded state according to an embodiment.

Referring to FIG. 1, FIG. 2A, FIG. 2B, FIG. 2C, FIG. 2D, and FIG. 3, the at least one processor 120 of the electronic device 200 according to an embodiment may cause the second display 203 not to display a screen in an off state or control the first display 202 to display a first screen 311 of a currently running application in an on state while the second housing 220 and/or the third housing 220 are in a folded state as shown in FIG. 2C, the second display being disposed on the rear surface of the second housing 220 (e.g., the second side of the first housing, the fourth side of the second housing, and the sixth side of the third housing).

According to an embodiment, when the second display 203 is turned off while the second housing 220 and/or the third housing 230 are in a folded state, and it is identified that the second housing 220 is unfolded (hereinafter, referred to as a first unfolded state (unfolding)) with no user input or it is identified the third housing 230 is unfolded from the first unfolded state (hereinafter, referred to as a second unfolded state) with no user input, the at least one processor 120 may control the first display 202 to maintain the second display area 202b of the first display 202 or the entire area 202a, 202b, and 202c of the first display 202 in an off state. In this case, the at least one processor 120 may control the second display 203 to maintain the second display 202 in an off state. The second display area 202b of the first display 202 is an area exposed to the outside as the second housing 220 is unfolded and may be an area having a size identical or similar to that of the front surface (e.g., the third side) of the second housing 220.

According to an embodiment, when the first screen 311 is displayed while the second housing 220 and the third housing 230 are in a folded state, and it is identified that the second housing 220 is unfolded with no user input, the at least one processor 120 may control the first display 202 to display the first screen 311 on the second display area 202b of the first display 202. In this case, the at least one processor 120 may turn off the second display 203. According to an embodiment, when the first screen 311 is displayed while the second housing 220 and the third housing 230 are in a folded state, and it is identified that the second housing 220 is unfolded and then the third housing 230 is unfolded with no user input, the at least one processor 120 may extend the first screen 311 and control the first display 202 to display an extended first screen 311a on the entire area 202a, 202b, and 202c of the first display 202.

According to an embodiment, when the first screen 311 is displayed while the second housing 220 and the third housing 230 are in a folded state, a first user input 301 is received in the first unfolded state, and the second unfolded state is identified, the at least one processor 120 may maintain the first screen 311 displayed on the second display area 202b of the first display 202 without change, and control the first display 202 to display a second screen 313a having an adjusted (e.g., expanded) size on the first display area 202a and the third display area 202c of the first display 202. The first user input 301 may be an input of a first button (e.g., a power button) disposed on a lateral side of the second housing 220. The first display area 202a of the first display 202 is an area exposed toward the user as the first housing 210 is unfolded and may be an area having a size identical or similar to that of the front surface (e.g., the first side) of the first housing 110. The third display area 202c of the first display 202 is an area exposed toward the user as the third housing 230 is unfolded and may be an area having a size identical or similar to that of the front surface (e.g., the fifth side) of the third housing 230.

According to an embodiment, when the first screen 311 is displayed while the second housing 220 and the third housing 230 are in a folded state, a second user input 303 is received in the first unfolded state, and the second unfolded state is identified, the at least one processor 120 may maintain the first screen 311 displayed on the second display area 202b of the first display 202 without change, and control the first display 202 to display a second screen 313 (e.g., home screen) and a third screen 315 on the first display area 202a and the third display area 202c of the first display 202. The second user input 301 may be an input of a second button (e.g., a volume button) disposed on a lateral side of the second housing 220.

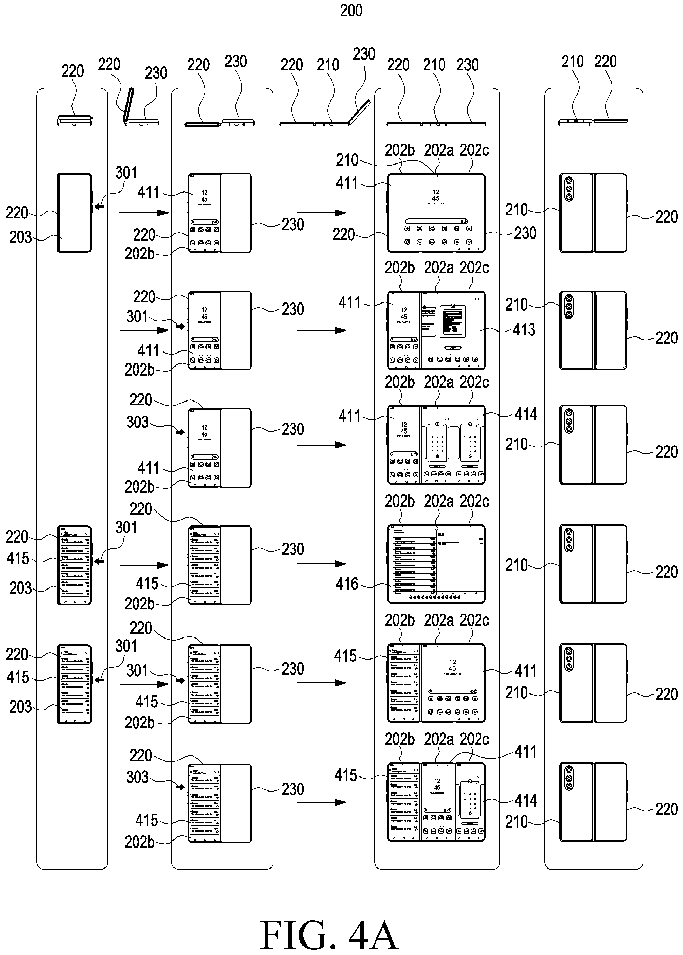

FIG. 4A is a diagram illustrating an example of controlling a screen of a display according to a change of an electronic device from a folded state to an unfolded state according to an embodiment.

Referring to FIG. 1, FIG. 2A, FIG. 2B, FIG. 2C, FIG. 2D, and FIG. 4A, according to an embodiment, the at least one processor 120 of the electronic device 200 may receive a first user input 301 (e.g., a power button input), turn off the second display 203 while the second housing 220 and the third housing 230 are in a folded state, and identify that the second housing 220 is unfolded (hereinafter, referred to as a first unfolded state). According to an embodiment, when the first user input 301 is received while the second housing 220 and the third housing 230 are in a folded state, and it is identified that the folded state is changed to the first unfolded state, the at least one processor 120 may display a specified second screen 411 (e.g., a home screen) on the second display area 202b of the first display 202. The second display 203 may be turned off.

According to an embodiment, when it is identified that the third housing 230 is unfolded (hereinafter, referred to as a second unfolded state) with no user input, the at least one processor 120 may control the first display 202 to enlarge the second screen 411 to fit the entire area 202a, 202b, and 202c of the first display 202 and display the enlarged screen.

According to an embodiment, when the first user input 301 is received again in the first unfolded state, and the second unfolded state is identified, the at least one processor 120 may maintain the second screen 411 on the second display area of the first display 202 without change, and control the first display 202 to display a third screen 413 on the first display area 202a and the third display area 202c of the first display 202. The third screen 413 may be an execution screen of a recently executed application. For example, the third screen 413 may be an application being executed (not terminated) in a background state without being displayed on the second display 203 in the folded state.

According to an embodiment, when a second user input 303 is received again in the first unfolded state, and the second unfolded state is identified, the at least one processor 120 may maintain the second screen 411 on the second display area of the first display 202 without change, and control the first display 202 to display a fourth screen 414 on the first display area 202a and the third display area 202c of the first display 202. The fourth screen 414 may be an execution screen of a recently executed application. For example, the fourth screen 414 may be an application being executed (not terminated) in a background state without being displayed on the second display 203 in the folded state.

According to an embodiment, the at least one processor 120 may receive the first user input 301 while displaying a first screen 415 on the second display 203 in a folded state of the second housing 220 and the third housing 230, and identify the first unfolded state. According to an embodiment, when the first user input 301 is received in a folded state, and it is identified that the state is changed to the first unfolded state, the at least one processor 120 may display the first screen 415 on the second display area 202b of the first display 202 without change. The second display 203 may be turned off.

According to an embodiment, when it is identified that the first unfolded state is changed to the second unfolded state with no user input, the at least one processor 120 may control the first display 202 to enlarge the first screen 415 to fit the entire area of the first display 202 and display the enlarged screen.

According to an embodiment, when the first user input 301 is received again in the first unfolded state, and it is identified that the state is changed to the second unfolded state, the at least one processor 120 may maintain the first screen 415 on the second display area 202b of the first display 202 without change, and extend the second screen 411 (e.g., home screen) and display the extended screen on the first display area 202a and the third display area 202c of the first display 202.

According to an embodiment, when the second user input 303 is received in the first unfolded state, and it is identified that the state is changed to the second unfolded state, the at least one processor 120 may maintain the first screen 415 on the second display area 202b of the first display 202 without change, display the second screen 411 on the first display area 202a of the first display 202, and display an execution screen (e.g., the third screen 413 or the fourth screen 414) of a recently executed application on the third display area 202c of the first display 202. For example, the execution screen (e.g., the third screen 413 or the fourth screen 414) of a recently executed application may be an application being executed (not terminated)) in a background state without being displayed on the second display 203 in the folded state.

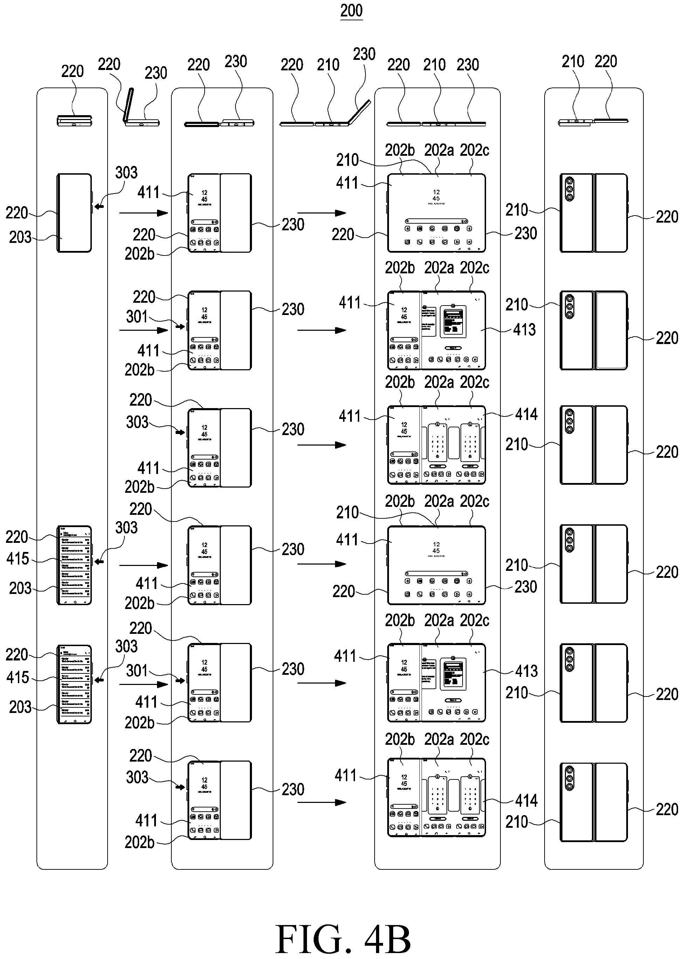

FIG. 4B is a diagram illustrating an example of controlling a screen of a display according to a change of an electronic device from a folded state to an unfolded state according to an embodiment.

Referring to FIG. 1, FIG. 2A, FIG. 2B, FIG. 2C, FIG. 2D, and FIG. 4B, according to an embodiment, the at least one processor 120 of the electronic device 200 may turn off the second display 203 or display a first screen 415 on the second display 203 while the second housing 220 and the third housing 230 are in a folded state, receive a second user input 303 (e.g., a volume button input), and identify that the second housing 220 is unfolded (hereinafter, referred to as a first unfolded state). According to an embodiment, when the second user input 303 is received while the second housing 220 and the third housing 230 are in a folded state, and it is identified that the folded state is changed to the first unfolded state, the at least one processor 120 may display a specified second screen 411 on the second display area 202b of the first display 202. In this case, the at least one processor 120 may maintain the second display 203 in an off state or remove the first screen 415 displayed on the second display 203 and then turn off the second display.

According to an embodiment, when it is identified that the third housing 230 is unfolded from the first folded state (hereinafter, referred to as a second unfolded state) with no user input, the at least one processor 120 may control the first display 202 to enlarge the second screen 411 and display the enlarged screen on the entire display area of the first display 202 (e.g., the first display area 202a, the second display area 202b, and the third display area 202c of the first display 202).

According to an embodiment, when a first user input 301 is received in the first unfolded state, and the second unfolded state is identified, the at least one processor 120 may maintain the second screen 411 on the second display area 202b of the first display 202 without change, and display a third screen 413 on the first display area 202a and the third display area 202c of the first display 202.

According to an embodiment, when the second user input 303 is received again in the first unfolded state, and the second unfolded state is identified, the at least one processor 120 may maintain the second screen 411 on the second display area 202b of the first display 202 without change, and display a fourth screen 414 on the first display area 202a and the third display area 202c of the first display 202.

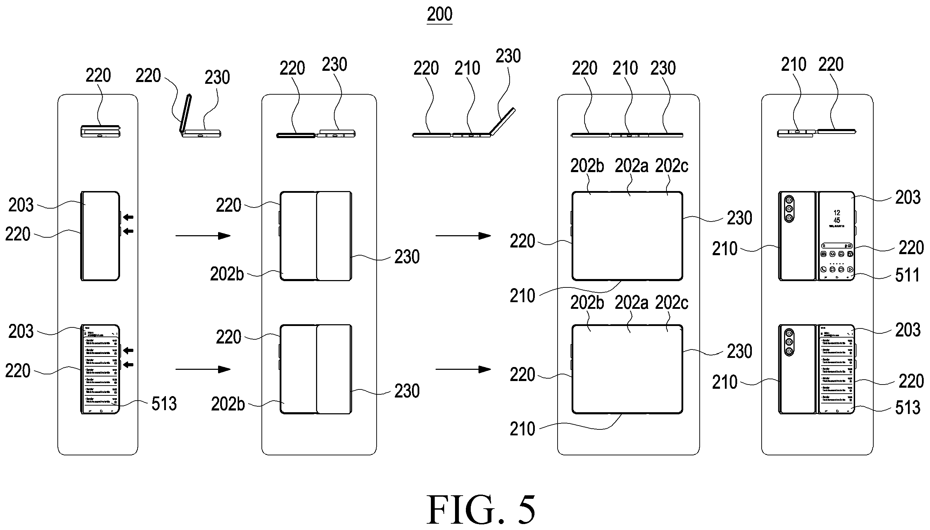

FIG. 5 is a diagram illustrating an example of controlling a screen of a display according to a change of an electronic device from a folded state to an unfolded state according to an embodiment.

Referring to FIG. 1, FIG. 2A, FIG. 2B, FIG. 2C, FIG. 2D, and FIG. 5, according to an embodiment, when a third user input 501 (e.g., a concurrent input of two or more buttons) is received while the first housing 220 and the third housing 230 are in a folded state, and it is identified that the second housing 220 is unfolded (hereinafter, referred to as a first unfolded state), the at least one processor 120 of the electronic device 200 may turn off the second display area 202b of the first display 202. The at least one processor 120 may display a specified screen 511 (e.g., a home screen) on the second display 203 in the first unfolded state. When it is identified that the third housing 230 is unfolded (hereinafter, a second unfolded state) after the first folded state, the at least one processor 120 may turn off the entire display area of the first display 202 (e.g., the first display area 202a, the second display area 202b, and the third display area 202c of the first display 202).

According to an embodiment, when an execution screen 513 of a running application is displayed on the second display 203 while the first housing 220 and the third housing 230 are in a folded state, the third user input 501 is received, and the first unfolded state is identified, the at least one processor 120 may turn off the second display area 202b of the first display 202, and maintain the execution screen 513 on the second display 203 without change. When the second unfolded state is identified after the first folded state, the at least one processor 120 may turn off the entire display area of the first display 202 (e.g., the first display area 202a, the second display area 202b, and the third display area 202c of the first display 202).

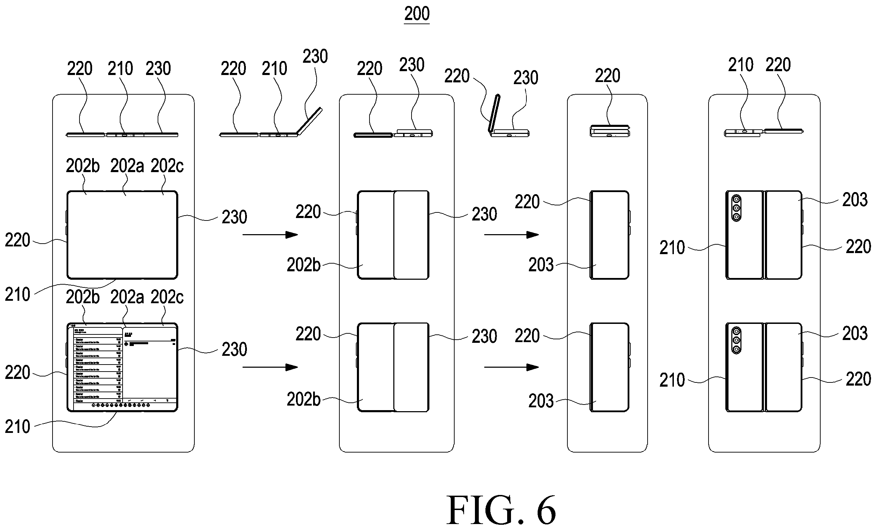

FIG. 6 is a diagram illustrating an example of controlling a screen of a display according to a change in an electronic device from an unfolded state to a folded state according to an embodiment.

Referring to FIG. 1, FIG. 2A, FIG. 2B, FIG. 2C, FIG. 2D, and FIG. 6, according to an embodiment, when it is identified that the second housing 220 and/or the third housing 230 is folded with respect to the first housing 210 in an unfolded state with no user input, the at least one processor 120 may determine a closing operation of the electronic device 200 and turn off the first display 202 and the second display 203. If the first display 202 (e.g., the first display area 202a, the second display area 202b, and the third display area 202c of the first display 202) is turned off in the unfolded state, the at least one processor 120 may maintain the off state, and if a screen of a running application is displayed on the first display 202, may remove the displayed screen and then turn off the first display 202.

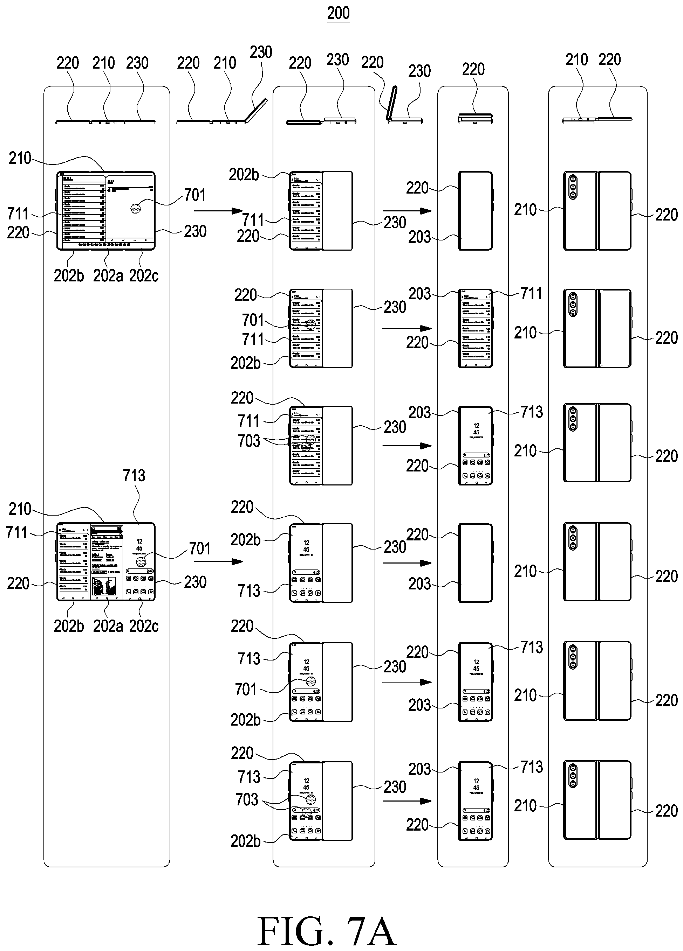

FIG. 7A is a diagram illustrating an example of controlling a screen of a display according to a change in an electronic device from an unfolded state to a folded state according to an embodiment.

Referring to FIG. 1, FIG. 2A, FIG. 2B, FIG. 2C, FIG. 2D, and FIG. 7A, according to an embodiment, when a touch input 701 (e.g., a single touch input) is received while the second housing 220 and the third housing 230 are unfolded, and it is identified that the third housing 230 is folded (e.g., a first folded state), the at least one processor 120 of the electronic device 200 may reduce a first screen 711 (e.g., an execution screen of a first application) displayed at a location of the first display 202 at which the touch input 701 is received, such that the first screen fits the second display area 202b of the first display 202, and display the reduced screen. The second display 203 may be in an off state. The touch input 701 may be named as a fourth user input.

According to an embodiment, when it is identified that the second housing 220 is folded from the first folded state (e.g., a second folded state) with no user input, the at least one processor 120 may not display the first screen 711 on the second display 203 and turn off the second display 203.

According to an embodiment, when the touch input 701 (e.g., a single touch input) is received again in the first folded state, and it is identified that the first folded state is changed to the second folded state, the at least one processor 120 may control the second display 203 to display the first screen 711 displayed on the second display area 202b of the first display 202 on the second display 203 without change.

According to an embodiment, when a different touch input 703 (e.g., a double-touch input) is received in the first folded state, and it is identified that the first folded state is changed to the second folded state, the at least one processor 120 may remove the first screen 811 displayed on the second display area of the first display 202, and control the second display 203 to display, on the second display 203, a specified second screen 713 (e.g., home screen) as a screen specified to correspond to the (2-2)th user input 703. The different touch input 703 may be named as a fifth user input.

According to an embodiment, the at least one processor 120 may identify that a multi-screen is displayed on the first display 202 while the second housing 220 and the third housing 230 are unfolded. When the touch input 701 (e.g., a single touch input) is received while the second housing 220 and the third housing 230 are unfolded, and the first folded state is identified, the at least one processor 120 of the electronic device 200 may display, on the second display area 202b of the first display 202, a second screen 813 (e.g., home screen) displayed at a location of the first display 202 at which the touch input 701 is received. The second display 203 may be in an off state.

According to an embodiment, when the second folded state is identified from the first folded state with no user input, the at least one processor 120 may not display the first screen 711 on the second display 203 and turn off the second display 203.

According to an embodiment, when the touch input 701 (e.g., a single touch input) is received again in the first folded state, and the second folded state is identified from the first folded state, the at least one processor 120 may control the second display 203 to display the second screen 713 displayed on the second display area 202b of the first display 202 on the second display 203 without change.

According to an embodiment, when the (2-2)th user input 703 (e.g., a double-touch input) is received in the first folded state, and the second folded state is identified from the first folded state, the at least one processor 120 may control the second display 203 to display, on the display 203, the second screen 713 as a screen specified to correspond to the (2-2)th user input 703.

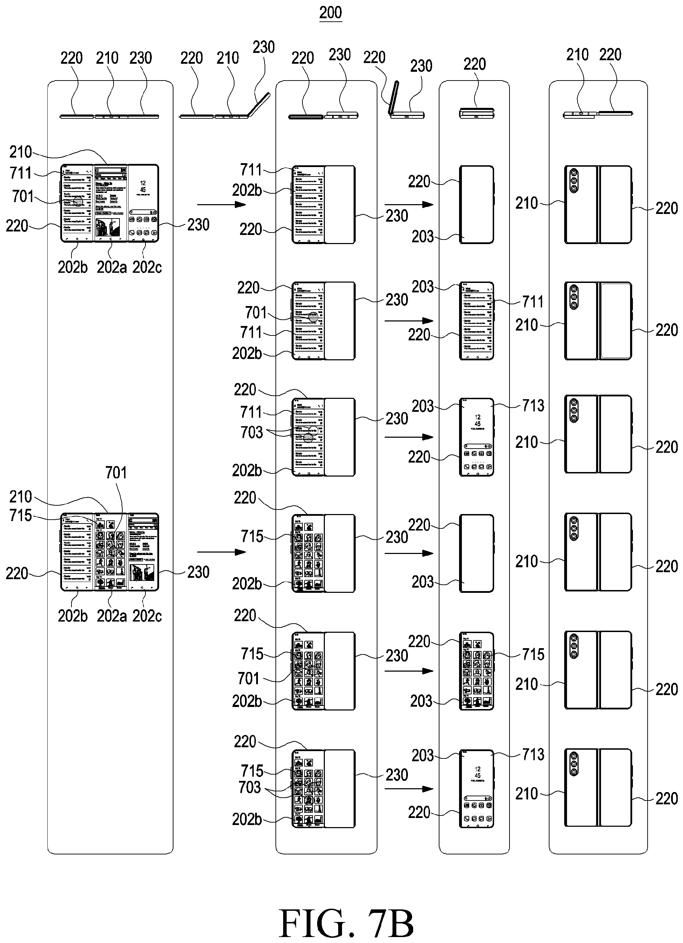

FIG. 7B is a diagram illustrating an example of controlling a screen of a display according to a change in an electronic device from an unfolded state to a folded state according to an embodiment.

Referring to FIG. 1, FIG. 2A, FIG. 2B, FIG. 2C, FIG. 2D, and FIG. 7B, according to an embodiment, when multiple screens are displayed on the first display 202 (e.g., the first display area 202a, the second display area 202b, and the third display area 202c of the first display 202) while the second housing 220 and the third housing 230 are unfolded, a touch input 701 (e.g., a single touch input) is received, and it is identified that the third housing 230 is folded (e.g., a first folded state), the at least one processor 120 of the electronic device 200 may control the second display 203 to display, without change and on the second display area 202b of the first display 202, a first screen 711 (e.g., an execution screen of a first application) displayed at a location of the first display 202 at which the touch input 701 is received. The second display 203 may be in an off state.

According to an embodiment, when it is identified that the second housing 220 is folded from the first folded state (e.g., a second folded state) with no user input, the at least one processor 120 may not display the first screen 711 on the second display 203 and turn off the second display 203. According to an embodiment, when the touch input 701 (e.g., a single touch input) is received again in the first folded state, and the second folded state is identified from the first folded state, the at least one processor 120 may control the first display 202 to display the first screen 711 displayed on the second display area 202b of the first display 202 on the second display 203 without change. According to an embodiment, when a different touch input 703 (e.g., a double-touch input) is received in the first folded state, and the second folded state is identified from the first folded state, the at least one processor 120 may remove the first screen 711 displayed on the second display area 202b of the first display 202, and control the second display 203 to display, on the second display 203, a second screen 713 (e.g., home screen) specified to correspond to the different touch input 703.

According to an embodiment, when the (2-1)th user input 701 (e.g., a single touch input) is received in an unfolded state, and the first folded state is identified, the at least one processor 120 may control the first display 202 to display, on the second display area 202b of the first display 202 and without change, a third screen 715 (e.g., an execution screen of a second application) displayed at a location of the first display 202 at which the touch input 701 is received. The second display 203 may be in an off state.

According to an embodiment, when the second folded state is identified from the first folded state with no user input, the at least one processor 120 may not display the third screen 715 on the second display 203 and turn off the second display 203.

According to an embodiment, when the touch input 701 (e.g., a single touch input) is received again in the first folded state, and the second folded state is identified from the first folded state, the at least one processor 120 may control the second display 203 to display the third screen 715 displayed on the second display area 202b of the first display 202 on the second display 203 without change.

According to an embodiment, when the different touch input 703 (e.g., a double-touch input) is received in the first folded state, and the second folded state is identified from the first folded state, the at least one processor 120 may remove the third screen 715 displayed on the second display area 202b of the first display 202, and control the second display 203 to display, on the second display 203, the second screen 813 (e.g., home screen) specified to correspond to the different touch input 703.

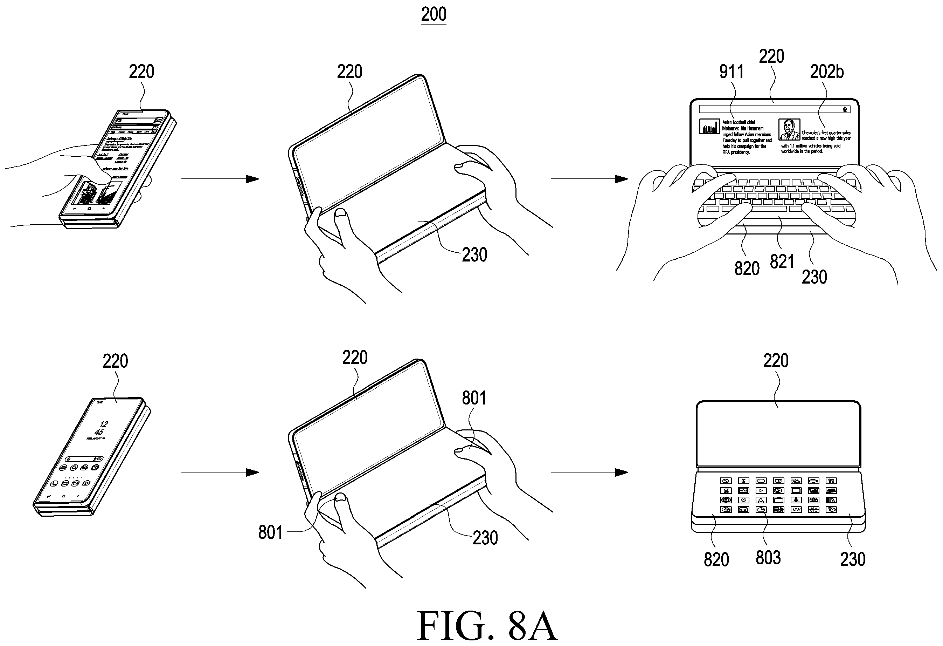

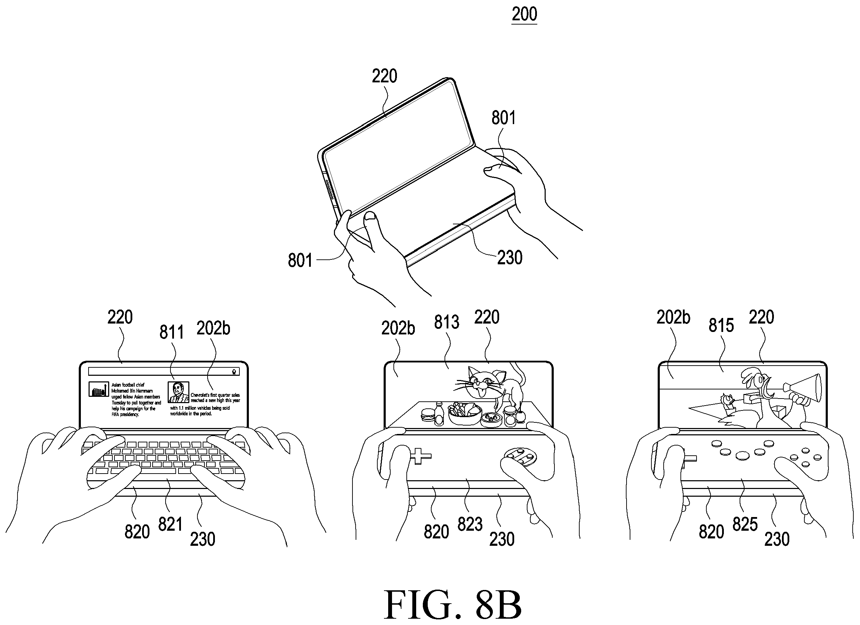

FIGS. 8A and 8B are diagrams illustrating an example of controlling a screen of a display according to a change of an electronic device from a folded state to an unfolded state according to an embodiment.

Referring to FIG. 1, FIG. 2A, FIG. 2B, FIG. 2C, FIG. 2D, FIG. 8A, and FIG. 8B, according to an embodiment, the electronic device 200 (e.g., the electronic device 101 in FIG. 1) may configure an input/output area 901 on the rear surface (e.g., the second side) of the third housing 230. According to an embodiment, the at least one processor 120 may identify that the second housing 220 of the first display 202 is unfolded while displaying a screen 811 of a running application on the second display 203 in a folded state. When an unfolded state of the second housing 220 is identified, and a multi-touch input 801 (e.g., a third user input) is received in an input/output area 820 on the rear surface (e.g., the sixth side) of the third housing 230, the at least one processor 120 may display the screen 811 displayed on the second display 203 on the second display area 202b of the first display 202 and execute (e.g., display) an input/output interface 821 (UX) of the running application on the input/output area 820 disposed on the rear surface of the third housing 230.

According to an embodiment, when the third user input 801 (e.g., a double-touch input) is maintained for a predetermined time on the second display 203, if there is no application in use on the second display 203, the at least one processor 120 may display a list 803 enabling selection of applications in the input/output area 820 disposed on the rear surface of the third housing 230. The at least one processor 120 may execute (e.g., display) an input/output interface 921, 923, or 925 (UX) of an application selected by the user in the input/output area 820 disposed on the rear surface of the third housing 230, and control the first display 202 to display an execution screen 811, 813, or 815 of the selected application on the second display area 202b of the first display 202.

Referring to FIG. 1, FIG. 2A, FIG. 2B, FIG. 2C, and FIG. 2D, the electronic device 200 according to an embodiment may implement a software module (e.g., the program 140 in FIG. 1) for controlling a display screen. The memory 130 of the electronic device 200 may store instructions to implement the software module. The at least one processor 120 may execute the instructions stored in the memory 130 to implement the software module, and may control hardware (e.g., the sensor module 176, the power management module 188, or the communication module 190 in FIG. 1) associated with a function of the software module.

According to an embodiment, an application may be configured to include an application (e.g., a module, manager, or program) for controlling of a display screen. The application may be configured to further include a module (or application) (not illustrated) for wireless communication with an external electronic device (e.g., the electronic devices 102 or 104 or the server 108 in FIG. 1). The application 230 may include an application received from the external electronic device (e.g., the server 108 or the electronic device 102 or 104). According to an embodiment, the application may include a preloaded application or a third party application downloadable from the server. The elements and element names of the software module according to an illustrated embodiment may vary depending on a type of an operating system. According to an embodiment, at least a part of the software module may be implemented as software, firmware, hardware, or a combination of at least two of them. At least a part of the software module may, for example, be implemented (e.g., executed) by a processor (e.g., an AP). At least a part of the software module may include, for example, a module, program, routine, set of instructions, or process for performing at least one function.

As described above, in an embodiment, main elements of an electronic device have been described with reference to the electronic device 101 in FIG. 1 and the electronic device 200 in FIG. 2A, FIG. 2B, FIG. 2C, and FIG. 2D. However, in various embodiments, not all the elements illustrated in FIG. 1, FIG. 2A, FIG. 2B, FIG. 2C, and FIG. 2D are essential elements, the electronic device 101 or 200 may be implemented by more elements than the illustrated elements, or the electronic device 101 or 200 may be implemented by fewer elements than the illustrated elements. In addition, the positions of main elements of the electronic device 101 or 200 described with reference to FIG. 1, FIG. 2A, FIG. 2B, FIG. 2C, and FIG. 2D may be changeable according to various embodiments.

According to an embodiment, an electronic device (e.g., the electronic device 101 in FIG. 1 and the electronic device 200 in FIGS. 2A, 2B, 2C, and 2D) may include a first housing (e.g., the first housing 210 in FIGS. 2A, 2B, 2C, and 2D) including a first side and a second side and a second housing (e.g., the second housing 220 in FIGS. 2A, 2B, 2C, and 2D) rotatably connected to the first housing and including a third side and a fourth side, a first display (e.g., the display module 160 in FIG. 1 and the first display 202 in FIGS. 2A, 2B, 2C, and 2D) disposed at the first side of the first housing and the third side of the second housing, a second display (e.g., the display module 160 in FIG. 1 and the second display 203 in FIGS. 2A, 2B, 2C, and 2D) disposed at the fourth side of the second housing, the fourth side being configured to face a direction opposite to the third side, memory (e.g., the memory 130 in FIG. 1) storing instructions, the first display, and at least one processor (e.g., the processor 120 in FIG. 1).

According to an embodiment, the instructions may be configured to, when executed by the at least one processor individually or collectively, cause the electronic device to, when an execution screen of a first application is displayed on the second display, detect a change of an angle between the first housing and the second housing.

According to an embodiment, the instructions may be configured to, when executed by the at least one processor individually or collectively, cause the electronic device to, when the change is detected, identify whether a first user input is received.

According to an embodiment, the instructions may be configured to, when executed by the at least one processor individually or collectively, cause the electronic device to, when the first user input is received, control the first display to display a first screen on the first display.

According to an embodiment, the instructions may be configured to, when executed by the at least one processor individually or collectively, cause the electronic device to, when the first user input is not received, control the first display to display a second screen on the first display.

According to an embodiment, the first user input may be specified for determining a screen of the first display to be displayed when a state of the electronic device is being changed from a folded state to an unfolded state. According to an embodiment, the first user input may include a touch input on the second display or an input to at least one button disposed at a portion of a lateral side of the electronic device.

According to an embodiment, the second screen may include an execution screen of a first application fitted to the first display.

According to an embodiment, the first screen may include execution screens of at least two applications including the first application.

According to an embodiment, the electronic device may further include a third housing (e.g., the third housing 230 in FIGS. 2A, 2B, and 2C) rotatably connected to the first housing and including a fifth side and a sixth side.

According to an embodiment, the instructions may be configured to, when executed by the at least one processor individually or collectively, cause the electronic device to, when identifying a first unfolded state in which the second housing is unfolded and receiving the first user input, control the first display to display the first screen in a second display area of the first display, and
when identifying a second unfolded state in which the third housing is unfolded in the first unfolded state and receiving the first user input, maintain the first screen displayed in the second display area and control the first display to display a specified screen or multiple screens in a first display area and a third display area of the first display.

According to an embodiment, the first display area may be an area configured on the first side of the first housing, wherein the second display area may be an area configured on the third side of the second housing, and wherein the third display area may be an area configured on the fifth side of the third housing.

According to an embodiment, the instructions may be configured to, when executed by the at least one processor individually or collectively, cause the electronic device to, when the state is changed to the first unfolded state, identify whether a second user input is received, and when the second user input is received, control the first display to display a specified screen in the second display area.

According to an embodiment, the second user input may include an input to any one of the at least one button disposed at a portion of a lateral side of the electronic device.

According to an embodiment, the instructions may be configured to, when executed by the at least one processor individually or collectively, cause the electronic device to, when the state is changed from the first unfolded state to the second unfolded state and the first user input is not received, control the first display to expand the first screen displayed in the second area of the first display and display the expanded first screen in an entire area of the first display.

According to an embodiment, the instructions may be configured to, when executed by the at least one processor individually or collectively, cause the electronic device to, when the state is changed to the first unfolded state, identify whether a third user input is received, and when the third user input is received, turn off the first display and control the first display to display a specified screen or maintain a previously displayed screen on the second display, and the third user input may include a concurrent input to two or more buttons disposed at a portion of a lateral side of the electronic device.

According to an embodiment, the instructions may be configured to, when executed by the at least one processor individually or collectively, cause the electronic device to, when the state is changed from the unfolded state to a first folded state in which the third housing is folded, identify whether a touch input is received, when the touch input is received, control the first display to display the second screen on the second display area of the first display in the first folded state, when the state is changed from the first folded state to a second folded state in which the second housing is folded, identifying whether the touch input is received, and when the touch input is received, control the second display to display, on the second display, the second screen displayed on the second display area of the first display. According to an embodiment, the second screen may be a screen displayed at a location where the touch input is received.

According to an embodiment, the instructions may be configured to, when executed by the at least one processor individually or collectively, cause the electronic device to, when the state is changed from the first folded state to the second folded state, identify whether another touch input is received, and when the another touch input is received, control the first display to remove the second screen displayed in the second display area and control the second display to display a specified screen on the second display.

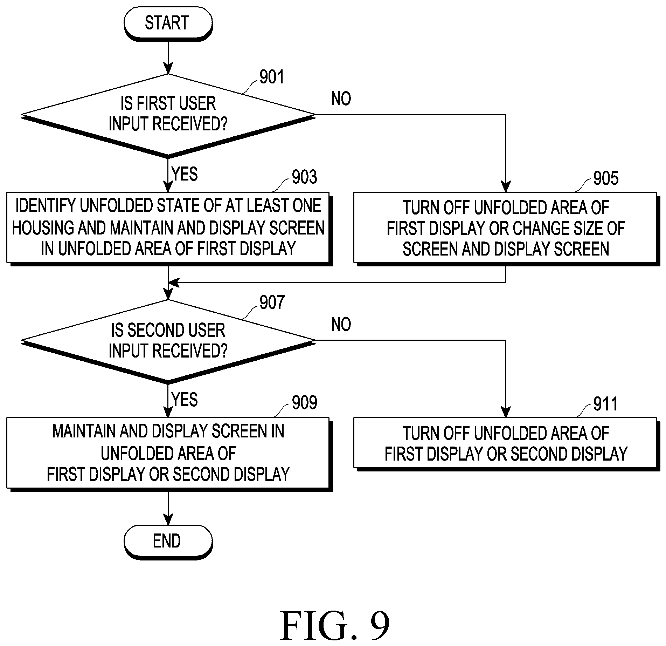

FIG. 9 is a diagram illustrating an example of an operation method of an electronic device according to an embodiment. In the embodiment below, operations may be sequentially performed, but are not necessarily performed sequentially. For example, the sequence of operations may be changed, and at least two operations may be performed in parallel.

Referring to FIG. 9, an electronic device (e.g., the electronic device 101 in FIG. 1 and the electronic device 200 in FIG. 2A, FIG. 2B, FIG. 2C, and FIG. 2D) according to an embodiment may, in operation 901, identify whether a first user input is received while at least one housing (a second housing and/or a third housing) configured on both sides of a first housing (e.g., the first housing 210 in FIG. 2A, FIG. 2B, FIG. 2C, and FIG. 2D) is in a folded state. The electronic device according to an embodiment may, when an execution screen of a first application is displayed on a second display so that a state of the electronic device is changed from a folded state to an unfolded state, detect a change of an angle between the first housing and the second housing, and when the change is detected, identify whether the first user input is received. If a result of the identification in operation 901 indicates that the first user input is received, the electronic device may perform operation 903 and, when the user input is not received, perform operation 905. The first user input is a first user input of a first type, may be named as a (1-1)th user input, and for example, may be a power button disposed on a lateral side of the second housing (e.g., the second housing 220 in FIGS. 2A, 2B, 2C, and 2D).

In operation 903, based on identifying that the first user input is received, the electronic device may identify that the at least one housing (the second housing and/or the third housing) is changed to be in an unfolded state, and maintain a screen displayed on the second display or an unfolded area (e.g., a second display area) of the first display without change and display the screen on an unfolded area (e.g., the second display area) of the first display. Thereafter, the electronic device may perform operation 907. In operation 903, according to an embodiment, when the second housing and the third housing (e.g., the third housing 230 in FIGS. 2A, 2B, and 2C) are both in an unfolded state, maintain a screen displayed on the second display or an unfolded area (e.g., the second display area) of the first display without change and display the screen, and display at least one different screen on remaining unfolded areas (e.g., a first display area and a third display area) of the first display.

In operation 905, based on the first user input not being received, the electronic device may turn off an unfolded area (e.g., the second display area or the first to third display areas) of the first display, or change a size of the screen displayed on the second display to fit an unfolded area of the first display and display the screen. Thereafter, the electronic device may perform operation 907.

In operation 907, the electronic device may identify whether a second user input is received while the at least one housing (the second housing and/or the third housing) configured on both sides of the first housing is in an unfolded state. If a result of the identification indicates that the second user input is received, the electronic device may perform operation 909 and, when the second user input is not received, perform operation 911. The second user input is a second user input of a first type, may be named as a (2-1)th user input, and for example, may be a single touch input.

In operation 909, based on the second user input being received, the electronic device may maintain, without change, a screen displayed in an area of the first display corresponding to a location where the second user input is received, and display the screen on an unfolded area (e.g., the second display area) of the first display or on the second display.

In operation 911, based on the second user input not being received, the electronic device may turn off an unfolded area (e.g., the second display area) of the first display and/or the second display.

According to an embodiment, when a first user input (e.g., a volume button input) different from the first user input (e.g., a power button input) received in operation 903 described above is received, the electronic device may display a specified screen (e.g., home screen) on an unfolded area (e.g., the second display area) of the first display. The different first user input is a first user input of a second type, may be named as a (1-2)th user input, and for example, may be a volume button disposed on a lateral side of the second housing. According to an embodiment, when the different first user input (e.g., a volume button input) is received, the electronic device may not display a screen (e.g., the execution screen of the running first application) displayed on the second display on an unfolded area (e.g., the second display area) of the first display and display the specified screen.

According to an embodiment, when a third user input (e.g., a concurrent input of two or more buttons) is received in a folded state, the electronic device may determine a folding operation of the electronic device and, when the state is changed to an unfolded state, turn off the first display and display a specified screen (e.g., home screen) on the second display or maintain a displayed screen (e.g., the first screen) without change.

According to an embodiment, when a second user input (e.g., a double-touch input) different from the second user input (e.g., a single touch input) received in operation 907 described above is received, and it is identified that the second housing is folded in a folded state (e.g., a first folded state) of the third housing (e.g., a second folded state), the electronic device may display a specified screen on the second display. For example, the electronic device may not display, on the second display, a first screen displayed in an unfolded area (e.g., the second display area) of the first display in the first folded state, and display a specified screen on the second display. For example, when the specified screen is displayed in an unfolded area (e.g., the second display area) of the first display in the first folded state, the electronic device may maintain the specified screen without change and display same on the second display.

According to an embodiment, an operation method of an electronic device (e.g., the electronic device 101 in FIG. 1 and the electronic device 200 in FIGS. 2A, 2B, 2C, and 2D) including a first housing (e.g., the first housing 210 in FIGS. 2A, 2B, 2C, and 2D) including a first side and a second side and a second housing (e.g., the second housing 220 in FIGS. 2A, 2B, 2C, and 2D) rotatably connected to the first housing and including a third side and a fourth side may include, when an execution screen of a first application is displayed on a second display (e.g., the display module 160 in FIG. 1 and the second display 203 in FIGS. 2A, 2B, 2C, and 2D) of the electronic device, detecting a change of an angle between the first housing and the second housing.

According to an embodiment, the method may include, when the change is detected, identifying whether a first user input is received.

According to an embodiment, the method may include, when the first user input is received, displaying a first screen on a first display (e.g., the display module 160 in FIG. 1, or the first display 202 in FIGS. 2A, 2B, 2C, and 2D) of the electronic device.

According to an embodiment, the method may include, when the first user input is not received, displaying a second screen on the first display.

According to an embodiment, the first display may be disposed at the first side of the first housing and the third side of the second housing, and the second display 203 may be disposed at the fourth side of the second housing 220.

According to an embodiment, the first user input may be specified for determining a screen of the first display to be displayed when a state of the electronic device is changed from a folded state to an unfolded state.

According to an embodiment, the first user input may include a touch input on the second display or an input to at least one button disposed at a portion of a lateral side of the electronic device.

According to an embodiment, the second screen may include an execution screen of a first application fitted to the first display.

According to an embodiment, the first screen may include execution screens of at least two applications including the first application.

According to an embodiment, the displaying of the first screen on the first display further may further include, when identifying a first unfolded state in which the second housing is unfolded and receiving the first user input, displaying the first screen in a second display area of the first display, and when identifying a second unfolded state in which a third housing (e.g., the third housing 230 in FIGS. 2A, 2B, and 2C) rotatably connected to another side of the first housing and including a fifth side and a sixth side is unfolded in the first unfolded state and receiving the first user input, maintaining the first screen displayed in the second display area and displaying a specified screen or multiple screens in a first display area and a third display area of the first display. According to an embodiment, the first display area may be an area configured on the first side of the first housing, wherein the second display area may be an area configured on the third side of the second housing, and wherein the third display area may be an area configured on the fifth side of the third housing.

According to an embodiment, the method may further include, based on receiving a second user input in the folded state and identifying the first unfolded state, displaying a specified screen in the second display area. According to an embodiment, the second user input may be an input to a second button disposed on the third side of the second housing.

According to an embodiment, the method may further include, when the state is changed to the first unfolded state, identifying whether a second user input is received, and when the second user input is received, displaying a specified screen in the second display area, wherein the second user input includes an input to any one of the at least one button disposed at a portion of a lateral side of the electronic device.

According to an embodiment, the method may further include, when the state is changed from the first unfolded state to the second unfolded state and the first user input is not received, expanding the first screen displayed in the second area of the first display and displaying the expanded first screen in an entire area of the first display.

According to an embodiment, the method may further include, when the state is changed to the first unfolded state, identifying whether a third user input is received, and when the third user input is received, turning off the first display and displaying a specified screen or maintaining a previously displayed screen on the second display.

According to an embodiment, the third user input may include a concurrent input to two or more buttons disposed at a portion of a lateral side of the electronic device.

According to an embodiment, the method may further include, when the state is changed from the unfolded state to a first folded state in which the third housing is folded, identifying whether a touch input is received, when the touch input is received, displaying the second screen on the second display area of the first display in the first folded state, and based on the touch input in the first folded state and identifying a second folded state in which the second housing is folded, displaying, on the second display, the second screen displayed on the second display area of the first display.

According to an embodiment, the second screen may be a screen displayed at a location where the touch input is received.

According to an embodiment, in a non-transitory storage medium storing one or more programs, the one or more programs may include instructions, when executed by a processor (e.g., the processor 120 in FIG. 1) of an electronic device (e.g., the electronic device 101 in FIG. 1 and the electronic device 200 in FIGS. 2A, 2B, 2C, and 2D) including a first housing (e.g., the first housing 210 in FIGS. 2A, 2B, 2C, and 2D) including a first side and a second side and a second housing (e.g., the second housing 220 in FIGS. 2A, 2B, 2C, and 2D) rotatably connected to the first housing and including a third side and a fourth side, causing the electronic device to execute operations of, when an execution screen of a first application is displayed on a second display of the electronic device, detecting a change of an angle between the first housing and the second housing, when the change is detected, identifying whether a first user input is received, when the first user input is received, displaying a first screen on a first display of the electronic device, and when the first user input is not received, displaying a second screen on the first display.

According to an embodiment, the first display may be disposed at the first side of the first housing 210 and the third side of the second housing 220, and the second display 203 may be disposed at the fourth side of the second housing 220.

In the disclosure, the screen of the display may be controlled according to context, based on a user input (e.g., user interaction) and a folding or unfolding operation of the electronic device, a task being performed in the electronic device may be continued seamlessly without requiring a cognitive decision on other elements in the middle of the task, and the user's interaction elements such as additional application selection and screen control operations may be reduced, thereby providing an improved user experience. Various other effects identified directly or indirectly through this document may be provided. Effects which are acquirable by the disclosure are not limited to the effects described above, and other effects that have not been mentioned may be clearly understood by a person who has common knowledge in the technical field to which the disclosure belongs, from the following description.

The embodiments disclosed herein are proposed for explanation and understanding of the disclosed technical content, and are not intended to limit the scope of the technology disclosed herein. Therefore, the scope of this document should be interpreted as including all variations or various other embodiments based on the technical concept of this document.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (200) comprising:
a first housing (210) including a first side and a second side;
a second housing (220) rotatably connected to the first housing and including a third side and a fourth side;
a first display (202) disposed at the first side of the first housing and the third side of the second housing;
a second display (203) disposed at the fourth side of the second housing;
memory (130) storing instructions; and
at least one processor (120),
wherein the instructions, when executed by the at least one processor individually or collectively, cause the electronic device to:
when an execution screen of a first application is displayed on the second display, detect a change of an angle between the first housing and the second housing;
when the change is detected, identify whether a first user input is received;
when the first user input is received, control the first display to display a first screen on the first display; and
when the first user input is not received, control the first display to display a second screen on the first display.

2. The electronic device of claim 1,
wherein the first user input is specified for determining a screen of the first display to be displayed when a state of the electronic device is changed from a folded state to an unfolded state,
wherein the first user input comprises a touch input on the second display or an input to at least one button disposed at a portion of a lateral side of the electronic device,
wherein the second screen comprises an execution screen of the first application fitted to the first display, and
wherein the first screen comprises execution screens of at least two applications including the first application.

3. The electronic device of claim 1 or 2, further comprising
a third housing (230) rotatably connected to the first housing and including a fifth side and a sixth side,
wherein the instructions, when executed by the at least one processor individually or collectively, cause the electronic device to:
when identifying a first unfolded state in which the second housing is unfolded and receiving the first user input, control the first display to display the first screen in a second display area of the first display; and
when identifying a second unfolded state in which the third housing is unfolded in the first unfolded state and receiving the first user input, maintain the first screen displayed in the second display area and control the first display to display a specified screen or multiple screens in a first display area and a third display area of the first display,
wherein the first display area is an area configured on the first side of the first housing,
wherein the second display area is an area configured on the third side of the second housing, and
wherein the third display area is an area configured on the fifth side of the third housing.

4. The electronic device of any one of claims 1 to 3, wherein the instructions, when executed by the at least one processor individually or collectively, cause the electronic device to:
when the state is changed to the first unfolded state, identify whether a second user input is received; and
when the second user input is received, control the first display to display a specified screen in the second display area, and
wherein the second user input comprises an input to any one of the at least one button disposed at a portion of a lateral side of the electronic device.

5. The electronic device of any one of claims 1 to 4, wherein the instructions, when executed by the at least one processor individually or collectively, cause the electronic device to:
when the state is changed from the first unfolded state to the second unfolded state and the first user input is not received, control the first display to expand the first screen displayed in the second display area of the first display and display the expanded first screen in an entire area of the first display.

6. The electronic device of any one of claims 1 to 5, wherein the instructions, when executed by the at least one processor individually or collectively, cause the electronic device to:
when the state is changed to the first unfolded state, identify whether a third user input is received; and
when the third user input is received, turn off the first display and control the second display to display a specified screen or maintain a previously displayed screen on the second display, and
wherein the third user input comprises a concurrent input to two or more buttons disposed at a portion of a lateral side of the electronic device.

7. The electronic device of any one of claims 1 to 6, wherein the instructions, when executed by the at least one processor individually or collectively, cause the electronic device to:
when the state is changed from the unfolded state to a first folded state in which the third housing is folded, identify whether a touch input is received;
when the touch input is received, control the first display to display the first screen on the second display area of the first display in the first folded state;
when the state is changed from the first folded state to a second folded state in which the second housing is folded, identify whether the touch input is received; and
when the touch input is received, control the second display to display, on the second display, the first screen displayed on the second display area of the first display, and
wherein the first screen is a screen displayed at a location where the touch input is received.

8. The electronic device of any one of claims 1 to 7, wherein the instructions, when executed by the at least one processor individually or collectively, cause the electronic device to:
when the state is changed from the first folded state to the second folded state, identify whether another touch input is received; and
when the another touch input is received, control the first display to remove the first screen displayed in the second display area and control the second display to display a specified screen on the second display.

9. An operation method of an electronic device (200) comprising a first housing (210) including a first side and a second side and a second housing (220) rotatably connected to the first housing and including a third side and a fourth side, the method comprising:
when an execution screen of a first application is displayed on a second display of the electronic device, detecting a change of an angle between the first housing and the second housing;
when the change is detected, identifying whether a first user input is received;
when the first user input is received, displaying a first screen on a first display of the electronic device; and
when the first user input is not received, displaying a second screen on the first display,
wherein the first display is disposed at the first side of the first housing (210) and the third side of the second housing (220), and
wherein the second display (203) is disposed at the fourth side of the second housing (220).

10. The method of claim 9, wherein the first user input is specified for determining a screen of the first display to be displayed when a state of the electronic device is changed from a folded state to an unfolded state,
wherein the first user input comprises a touch input on the second display or an input to at least one button disposed at a portion of a lateral side of the electronic device,
wherein the second screen comprises an execution screen of the first application fitted to the first display, and
wherein the first screen comprises execution screens of at least two applications including the first application.

11. The method of claim 9 or 10, wherein the displaying of the first screen on the first display further comprises:
when identifying a first unfolded state in which the second housing is unfolded and receiving the first user input, displaying the first screen in a second display area of the first display; and
when identifying a second unfolded state in which a third housing (230) rotatably connected to another side of the first housing and including a fifth side and a sixth side is unfolded in the first unfolded state and receiving the first user input, maintaining the first screen displayed in the second display area and displaying a specified screen or multiple screens in a first display area and a third display area of the first display,
wherein the first display area is an area configured on the first side of the first housing,
wherein the second display area is an area configured on the third side of the second housing, and
wherein the third display area is an area configured on the fifth side of the third housing.

12. The method of any one of claims 9 to 11, further comprising:
when the state is changed to the first unfolded state, identifying whether a second user input is received;
when the second user input is received, displaying a specified screen in the second display area, wherein the second user input comprises an input to any one of the at least one button disposed at a portion of a lateral side of the electronic device; and
when the state is changed from the first unfolded state to the second unfolded state and the first user input is not received, expanding the first screen displayed in the second area of the first display and displaying the expanded first screen in an entire area of the first display.

13. The method of any one of claims 9 to 12, further comprising:
when the state is changed from the folded state to the first unfolded state, identifying whether a third user input is received; and
when the third user input is received, turning off the first display and displaying a specified screen or maintaining a previously displayed screen on the second display,
wherein the third user input comprises a concurrent input to two or more buttons disposed at a portion of a lateral side of the electronic device.

14. The method of any one of claims 9 to 13, further comprising:
when the state is changed from the unfolded state to a first folded state in which the third housing is folded, identifying whether a touch input is received;
when the touch input is received, based on identifying the first folded state in which the third housing is folded, displaying the second screen on the second display area of the first display in the first folded state; and
when the state is changed from the first folded state to a second folded state in which the second housing is folded, identifying whether the touch input is received, and when the touch input is received, displaying, on the second display, the second screen displayed on the second display area of the first display,
wherein the second screen is a screen displayed at a location where the touch input is received.

15. A non-transitory storage medium storing one or more programs, the one or more programs comprising instructions, when executed by a processor (120) of an electronic device (200) comprising a first housing (210) including a first side and a second side and a second housing (220) rotatably connected to the first housing and including a third side and a fourth side, causing the electronic device to execute operations of:
when an execution screen of a first application is displayed on a second display of the electronic device, detecting a change of an angle between the first housing and the second housing;
when the change is detected, identifying whether a first user input is received;
when the first user input is received, displaying a first screen on a first display of the electronic device; and
when the first user input is not received, displaying a second screen on the first display,
wherein the first display is disposed at the first side of the first housing (210) and the third side of the second housing (220), and
wherein the second display (203) is disposed at the fourth side of the second housing (220).
